# EUROPEAN PATENT APPLICATION

(11) **EP 2 139 167 A1**
(43) Date of publication of application: **30.12.2009**
(21) Application number: 08739966.3
(22) Date of filing: 07.04.2008
(51) Int. Cl.: H04L 12/28, G06F 3/00

(54) **COMMUNICATION TERMINAL DEVICE**

(30) Priority: 10.04.2007 JP 2007102964
(71) Applicant: Sharp Kabushiki Kaisha, Osaka-shi, Osaka 545-8522 (JP)
(72) Inventor: MATSUI, Kuniaki, Osaka 545-8522 (JP)
(74) Representative: Treeby, Philip David William
(86) International application number: PCT/JP2008/056863
(87) International publication number: WO 2008/126819

(57) **Abstract**

A first communication interface (11) is connected to a LAN (3). When a link of the first communication interface (11) is not detected or when data transfer is not detected, a processor (12) controls a power supply control unit (15) and stops power supply to a RAM (13), a flash memory (14) and to a second communication interface (16). Then, the processor (12) enters a power saving mode. Thus, power consumption can significantly be reduced.

## Description

### TECHNICAL FIELD

The present invention relates to a communication terminal device such as an STB (Set Top Box), a router, an IP (Internet Protocol) television, an IP telephone, an IP camera or a bridge for converting communication method and, more specifically, to a communication terminal device allowing reduction in power consumption.

### BACKGROUND ART

Conventionally, a communication terminal device such as an STB is kept in an operating state even when a communication link is not established or when there is no data communication, and electric power is kept supplied in the normal manner to various components in the communication terminal device. This has lead to a difficulty in reducing power consumption. The reason for this is that the communication terminal device itself cannot determine the timing at which a process becomes necessary and hence, it must be always kept ready to perform a process at the maximum speed.

Related techniques are known from inventions disclosed in the following patent documents.

A router disclosed in Japanese Patent Laying-Open No. 2001-320415 (Patent Document 1) includes: a WAN (Wide Area Network) side module control circuit that controls a switch circuit in response to an access request to an exchanger, and thereby to control power supply to the WAN side module; a link pulse detecting circuit detecting a link pulse exchanged between a terminal device and the router; and a power supply control unit controlling power supply to a terminal side module, a main control unit, a switch circuit and to the WAN side module control circuit, based on results of detection sent from the link pulse detecting circuit.

A dial-up router disclosed in Japanese Patent Laying-Open No. 11-331247 (Patent Document 2) has a plurality of channels of digital modems for dial-up connection, and includes communication state monitoring means for monitoring communication state of each channel, and power supply control means for controlling on/off of power supply to each channel based on the result of monitoring of the communication state monitoring means, and if there is no dial-up connection at all, the power supply control means controls power supply such that electric power is supplied only to a selected one of the plurality of channels, no power is supplied to other channels and that frequency of use of each channel is made uniform.

A control system disclosed in Japanese Patent Laying-Open No. 2002-152312 (Patent Document 3) includes: a user terminal receiving control information related to line disconnection, connection and change of line connection speed for controlling an ADSL (Asymmetric Digital Subscriber Line) circuit from a user, changing the information to a control signal for controlling the ADSL circuit and outputting the control signal at a set time; and an ADSL modem executing control of the ADSL circuit in response to the control signal; and by controlling the ADSL circuit, reduces power consumption when ADSL circuit is connected.

A communication system disclosed in Japanese Patent Laying-Open No. 11-145993 (Patent Document 4) has a first mode allowing communication with an external device connected to a data bus, and a second mode in which communication with the external device does not take place, the modes are switched at every prescribed period, and operation is controlled such that the second mode is not entered if an external device is detected in the first mode period.

A communication device disclosed in Japanese Patent Laying-Open No. 11-234315 (Patent Document 5) operates in a first period in which communication with an external device through a transfer path is available and a second period in which communication with an external device is unavailable, and the first and second periods are switched alternately such that the first period becomes longer than the second period.

In a semiconductor integrated circuit disclosed in Japanese Patent Laying-Open No. 2006-295825 (Patent Document 6), a detection determining circuit sets a logic level of a second signal in accordance with a logic level of a first signal after a prescribed time period from when attachment/detachment of a cable of a peripheral device is detected by an attachment/detachment detecting circuit. When the cable of a peripheral device is not connected, the semiconductor integrated circuit operates in a standby mode in which only the attachment/detachment detecting circuit operates, when the cable of a peripheral device is connected and a CPU is in an inactive state, it operates in a repeater mode in which only a PHY operates, and when the cable of a peripheral device is connected and the CPU is in an operating state, it operates in a normal mode in which both the PHY and LINK operate.

In a power saving device for an LAN (Local Area Network) board disclosed in Japanese Patent Laying-Open No. 2001-154763 (Patent Document 7), a power saving control unit outputs a power save transition notice when a computer makes a transition to a power saving mode. Receiving the power save transition notice, an I/O control unit writes a set value of slowest speed of possible communication with an external device, in a speed setting internal register through a network control unit. On the other hand, a communication control unit stores a speed at which the external device can communicate, in the speed setting internal register, based on a link pulse received from the external device. Then, based on the speed at which network control unit can communicate and the speed at which the external device can communicate, stored in the speed setting internal register, the communication control unit sets the slowest possible speed at which both can communicate.

In a network interface device disclosed in Japanese Patent Laying-Open No. 2002-16612 (Patent Document 8), a network interface unit detects a packet signal at a signal detecting unit. If it is not detected for a prescribed time period, a power control unit stops power supply to a transceiver unit and to a network controller unit. When a packet is detected, or when a packet is to be transmitted from main equipment, the power control unit resumes power supply to the transceiver unit and to the network controller unit.

A communication connecting apparatus disclosed in Japanese Patent Laying-Open No. 2005-109534 (Patent Document 9) includes: a communication interface connected to a telephone circuit and communicating with other terminal device through the telephone circuit, an exchange station and the Internet; terminal side communication means allowing communication with a terminal device; power supply means for supplying electric power to circuit side connecting means and the terminal side connecting means; detecting means for detecting whether there is any terminal device that can communicate with the terminal side communication means; and power supply control means for controlling the power supply means such that electric power is supplied to the circuit side connecting means if presence of a terminal device capable of communication with the terminal side communication means is detected, and electric power is not supplied to the circuit side connecting means if absence of a terminal device capable of communication with the terminal side communication means is detected.
Patent Document 1: Japanese Patent Laying-Open No. 2001-320415
Patent Document 2: Japanese Patent Laying-Open No. 11-331247
Patent Document 3: Japanese Patent Laying-Open No. 2002-152312
Patent Document 4: Japanese Patent Laying-Open No. 11-145993
Patent Document 5: Japanese Patent Laying-Open No. 11-234315
Patent Document 6: Japanese Patent Laying-Open No. 2006-295825
Patent Document 7: Japanese Patent Laying-Open No. 2001-154763
Patent Document 8: Japanese Patent Laying-Open No. 2002-16612
Patent Document 9: Japanese Patent Laying-Open No. 2005-109534

### DISCLOSURE OF THE INVENTION

### PROBLEMS TO BE SOLVED BY THE INVENTION

As described above, when electric power is constantly supplied to various components of a communication terminal device, power consumption in the communication terminal device increases. Further, as the electric power is constantly supplied to each component, durability life of the components becomes shorter.

In the router disclosed in Patent Document 1, the power supply control unit controls power supply to the terminal side module, the main control unit, the switch circuit and the WAN side module control circuit, based on the result of detection given from the link pulse detecting circuit. Power supply to the main control unit is resumed after the detection of link pulse and, therefore, a certain time is necessary until actual process is performed, depending, for example, on initial setting. This results in considerable delay in processing. Further, an ADSL modem device and the like takes time to establish a link to an exchanger and, therefore, a long wait time results until actual data transmission/reception starts, if connection is done after detecting the link pulse.

In the dial-up router disclosed in Patent Document 2, when there is no dial-up connection at all, power supply control means supplies electric power only to the selected channel among the plurality of channels, and electric power is not supplied to other channels. Therefore, it means that electric power is constantly supplied to at least one digital modem, and further reduction of power consumption is not expected. Further, what is controlled is electric power supply to a digital modem and, therefore, power supply to each component in the modem cannot be controlled.

In the control system disclosed in Patent Document 3, the ADSL circuit is controlled upon receiving an input of control information such as line disconnection, connection and change of line connection speed for controlling the ADSL circuit from the user and, therefore, it is impossible to improve controllability by the user. Further, power consumption is reduced through disconnection of ADSL circuit or by slowing the connection speed and, therefore, further reduction of power consumption is impossible.

The communication system disclosed in Patent Document 4 controls operation modes such that the second mode is not entered if an external device is detected in a period of the first mode. Therefore, if a communicable external device is detected, the first mode is entered even when actual communication does not take place, which possibly leads to increased power consumption.

In the communication device disclosed in Patent Document 5, the first and second periods are switched alternately such that the first period in which communication with an external device through a transfer path is possible is made longer than the second period in which communication with the external device is impossible. As in Patent Document 4, however, the first period may be entered even when actual communication does not take place and, therefore, power consumption may increase even when communication is not performed.

The semiconductor integrated circuit disclosed in Patent Document 6 operates in the repeater mode in which only the PHY operates when the cable of a peripheral device is connected and the CPU is in an inactive state, and operates in the normal mode in which both PHY and LINK operate, when the cable of a peripheral device is connected and the CPU is in an operating state. It is possible, however, that the CPU is set to the operating state even when actual communication is not done, and, therefore, power consumption may increase even when communication is not performed.

In the power saving device for an LAN board disclosed in Patent Document 7, the communication control unit stores the speed at which the external device can communicate in the speed setting internal register, based on the link pulse received from the external device, and based on the speed at which the network control unit can communicate and the speed at which the external device can communicate, stored in the speed setting internal register, sets the slowest speed at which both can communicate. Therefore, even when communication is not performed, electric power is supplied to each component in the power saving device and, power consumption cannot be reduced.

In the network interface device disclosed in Patent Document 8, if a packet signal is not detected for a prescribed time period by the signal detecting unit, power supply to the transceiver unit and to the network controller unit is stopped. However, only the power supply to the network peripheral circuit is stopped and, therefore, reduction in power consumption of the device as a whole cannot be attained.

In the communication connecting apparatus disclosed in Patent Document 9, if absence of any terminal device communicable to the terminal side communication means is detected, power supply means is controlled such that the electric power is not supplied to the circuit side connecting means. What is stopped is only the power supply to the circuit side connecting means and, therefore, reduction in power consumption of the apparatus as a whole cannot be attained. Further, when presence of a communicable terminal device is detected, power supply to the circuit side connecting means is resumed and, therefore, power is supplied even when data is not actually transmitted/received, resulting in increased power consumption.

The present invention was made to solve the above-described problems and its object is to provide a communication terminal device allowing significant reduction of power consumption.

Another object is to provide a communication terminal device that can recover from the power saving mode in a short period of time.

A still further object is to provide a communication terminal device that can recover from the power saving mode in accordance with a user instruction.

### MEANS FOR SOLVING THE PROBLEMS

According to an aspect, the present invention provides a communication terminal device, including: a first communication interface connected to a local area network; a processor for detecting an interruption from the first communication interface or detecting a state of the first communication interface in a prescribed period; and a power supply control unit for controlling power supply to various portions in accordance with a link state detected by the processor.

Preferably, when a link of the first communication interface is cut off, the processor controls the power supply control unit and stops power supply to the various portions.

More preferably, when a link of the first communication interface is cut off, the processor makes a transition to a power saving mode.

More preferably, when a link of the first communication interface is cut off, the processor sets an external device to a power save mode.

Preferably, when a link of the first communication interface is established, the processor controls the power supply control unit, to resume power supply to the various portions.

More preferably, when a link of the first communication interface is established, the processor recovers from the power saving mode.

Preferably, the communication terminal device further includes an input unit for receiving a user input, and when there is an input through the input unit, the processor controls the power supply control unit and resumes power supply to the various portions.

More preferably, when there is an input through the input unit, the processor recovers from the power saving mode.

Preferably, the communication terminal device further includes a second communication interface connected to a wide area network, and the processor detects interruption from the first communication interface and the second communication interface, or detects a link state of the first communication interface and the second communication interface in a prescribed period.

According to another aspect, the present invention provides a communication terminal device, including: a first communication interface connected to a local area network; a processor for detecting a state of the first communication interface; and a power supply control unit for controlling power supply to various portions in accordance with a data transfer state detected by the processor.

Preferably, the processor detects an interruption from the first communication interface or detects a state of the first communication interface in a prescribed period.

Preferably, when absence of data transfer by the first communication interface is detected, the processor controls the power supply control unit and stops power supply to the various portions.

More preferably, when absence of data transfer by the first communication interface is detected, the processor makes a transition to a power saving mode.

More preferably, when absence of data transfer by the first communication interface is detected, the processor sets an external device to a power save mode

Preferably, when presence of data transfer by the first communication interface is detected, the processor controls the power supply control unit and resumes power supply to the various portions.

More preferably, when presence of data transfer by the first communication interface is detected, the processor recovers from the power saving mode.

Preferably, the communication terminal device further includes an input unit for receiving a user input, and when there is an input through the input unit, the processor controls the power supply control unit and resumes power supply to the various portions.

More preferably, when there is an input through the input unit, the processor recovers from power saving mode.

Preferably, the communication terminal device further includes a second communication interface connected to a wide area network, and the processor detects data transfer state of the first communication interface and the second communication interface.

Preferably, the processor detects frequency of data transfer by the first communication interface, and controls frequency of clock supplied to the processor in accordance with the frequency information.

According to a further aspect, the present invention provides a communication terminal device, including: a communication interface connected to a local area network; a processor for detecting a state of the communication interface; and a power supply control unit for controlling power supply to various portions in accordance with link state and data transfer state detected by the processor.

### EFFECTS OF THE INVENTION

According to an aspect of the present invention, the power supply control unit controls power supply to various portions in accordance with a link state detected by the processor and, therefore, power consumption of the communication terminal device can significantly be reduced.

Further, when the link of the first communication terminal is cut off, the processor controls the power supply control unit such that power supply to various portions is stopped and, therefore, transition to the power saving mode can easily be attained.

Further, when the link of the first communication terminal is cut off, the processor makes a transition to the power saving mode and, therefore, power consumption can further be reduced.

Further, when the link of the first communication terminal is cut off, the processor sets the external device to a power save mode and, therefore, power consumption can further be reduced.

Further, when the link of the first communication interface is established, the processor controls the power supply control unit such that power supply to various portions is resumed and, therefore, easy recovery from the power saving state is possible.

Further, when the link of the first communication interface is established, the processor returns from the power saving mode and, therefore, the state before entering the power saving mode can be resumed in a short period of time.

Further, when there is an input through the input unit, the processor controls the power supply control unit so that power supply to various portions is resumed and, therefore, it is possible to set the communication terminal to the operating state in accordance with a user instruction.

Further, when there is an input through the input unit, the processor recovers from the power saving mode and, therefore, it is possible to set the communication terminal to the operating state in accordance with a user instruction.

Further, the processor detects interruption from the first communication interface and the second communication interface or detects the link state of the first communication interface and the second communication interface in a prescribed period and, therefore, it becomes possible to monitor the states of a plurality of communication interfaces.

According to another aspect of the present invention, the power supply control unit controls power supply to various portions in accordance with the state of data transfer detected by the processor and, therefore, it is possible to significantly reduce power consumption of the communication terminal device.

Further, the processor detects an interruption from the first communication interface, or detects the state of first communication interface in a prescribed period and, therefore, easy transition to the power saving state is possible.

Further, the processor controls the power supply control unit such that power supply to various portions is stopped, when absence of data transfer by the first communication interface is detected and, therefore, easy transition to the power saving state is possible.

Further, the processor makes a transition to the power saving mode when absence of data transfer by the first communication interface is detected and, therefore, power consumption can further be reduced.

Further, the processor sets the external device to the power save mode when absence of data transfer by the first communication interface is detected and, therefore, power consumption can further be reduced.

Further, the processor controls the power supply control unit such that power supply to various portions is resumed, when presence of data transfer from the first communication interface is detected and, therefore, easy recovery from the power saving state is possible.

Further, the processor recovers from the power saving mode when presence of data transfer by the first communication interface is detected and, therefore, the state before entering the power saving mode can be resumed in a short period of time.

Further, when there is an input through the input unit, the processor controls the power supply control unit so that power supply to various portions is resumed and, therefore, it is possible to set the communication terminal to the operating state in accordance with a user instruction.

Further, when there is an input through the input unit, the processor recovers from the power saving mode and, therefore, it is possible to set the communication terminal to the operating state in accordance with a user instruction.

Further, the processor detects the data transfer states of the first and second communication interfaces and, therefore, it is possible to monitor the states of a plurality of communication interfaces.

Further, the processor detects frequency of data transfer by the first communication interface and controls the frequency of clock supplied to the processor in accordance with the frequency information. Therefore, it becomes possible to reduce power consumption even when the communication terminal device is in the operating state.

According to a still further aspect, the power supply control unit controls power supply to various portions in accordance with the link state and the data transfer state detected by the processor and, therefore, power consumption of the communication terminal device can significantly be reduced.

### BRIEF DESCRIPTION OF THE DRAWINGS

Fig. 1 is a block diagram showing a schematic configuration of a communication system including a communication terminal device in accordance with a first embodiment of the present invention.
Fig. 2 is a flowchart representing a process flow of the communication terminal device in accordance with the first embodiment of the present invention.
Fig. 3 is a block diagram showing a schematic configuration of a communication system including a communication terminal device in accordance with a second embodiment of the present invention.
Fig. 4 is a flowchart representing a process flow of the communication terminal device in accordance with the second embodiment of the present invention.

### DESCRIPTION OF THE REFERENCE SIGNS

1, 6 communication terminal device, 2 computer, 3 LAN, 4 receptacle, 5 PLC, 7 display device, 11 first communication interface, 12 processor, 13 RAM, 14 flash memory, 15, 63 power supply control unit, 16 second communication interface, 17 interruption processing circuit, 61 user input device, 62 image processing DSP.

### BEST MODES FOR CARRYING OUT THE INVENTION

### (First Embodiment)

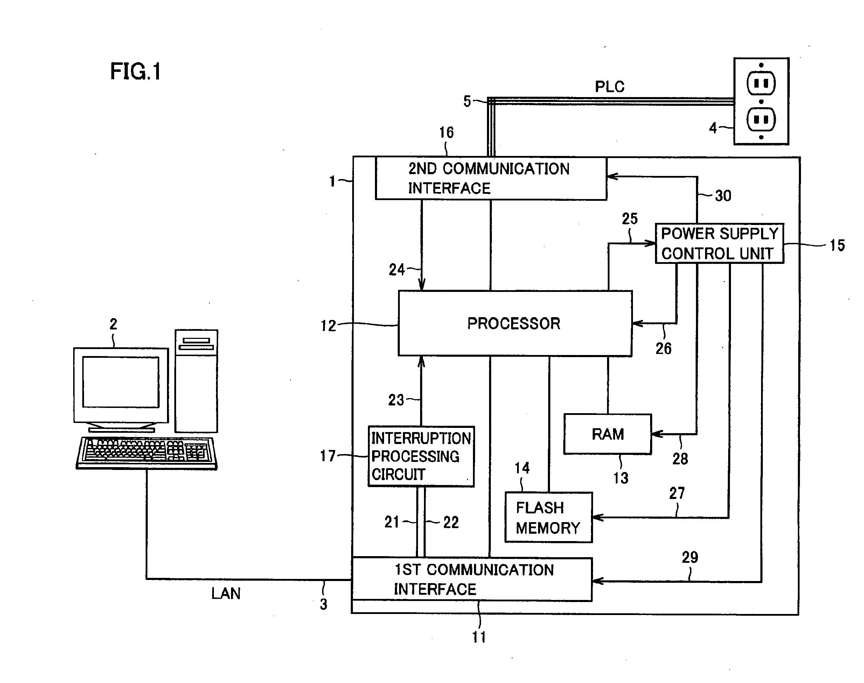

Fig. 1 is a block diagram showing a schematic configuration of the communication system including a communication terminal device in accordance with the first embodiment of the present invention. The communication system includes a communication terminal device 1 and a computer 2.

Communication terminal device 1 is connected to computer 2 through an LAN 3. Further, communication terminal device 1 is connected to a power line through a receptacle 4, and it is connectable to an external communication network such as the Internet through PLC (Power Line Communication) 5.

Communication terminal device 1 includes: a first communication interface 11 connected to computer 2 through LAN 3; a processor 12 for overall control of communication terminal device 1; a RAM (Random Access Memory) 13; a flash memory 14; a power supply control unit 15 controlling power supply to various components in communication terminal device 1; a second communication interface 16 connected to a power line through PLC 5; and an interruption processing circuit 17

The first communication interface 11 mainly controls the physical layer of LAN 3, and when establishment of a link is detected, it outputs a link detection interruption signal 21. Further, when data transfer from LAN 3 is detected, the first communication interface 11 outputs a data detection interruption signal 22.

Interruption processing circuit 17 asserts an interruption signal 23 to processor 12, when link detection interruption signal 21 from the first communication interface 11 is asserted and data detection interruption signal 22 is asserted.

Flash memory 14 stores, for example, a program to be executed by processor 12. RAM 13 stores a program from flash memory 14 transferred by processor 12, or it may be used as a work area.

The second communication interface 16 mainly controls the physical layer of PLC 5, and when establishment of a link is detected and when data transfer from PLC 5 is detected, it outputs an interruption signal 24 to processor 12. As in the case of first communication interface 11, interruption signal 24 may be output to processor 12 through interruption processing circuit 17.

The second communication interface 16 may have a configuration to be connected to a wide area network and it may be connected, for example, to ADSL, PON (Passive Optical Network), or a cable television.

Processor 12 transfers a program stored in flash memory 14 to RAM 13, and by executing the program, controls communication terminal device 1 as a whole.

Further, processor 12 has a power saving mode (sleep mode) function, and by an execution of a prescribed instruction, it makes a transition to the power saving mode, in which clock supply to the inside is stopped. When interruption signal 23 is asserted, processor 12 resumes clock supply to the inside, and restarts the program from the state before entering the power saving mode.

In accordance with a control signal 25 from processor 12, power supply control unit 15 controls power supply lines 26 to 30 supplying power to processor 12, flash memory 14, RAM 13 and the first and second communication interfaces 11 and 16. In the present embodiment, power is always supplied to processor 12 and the first communication interface 11.

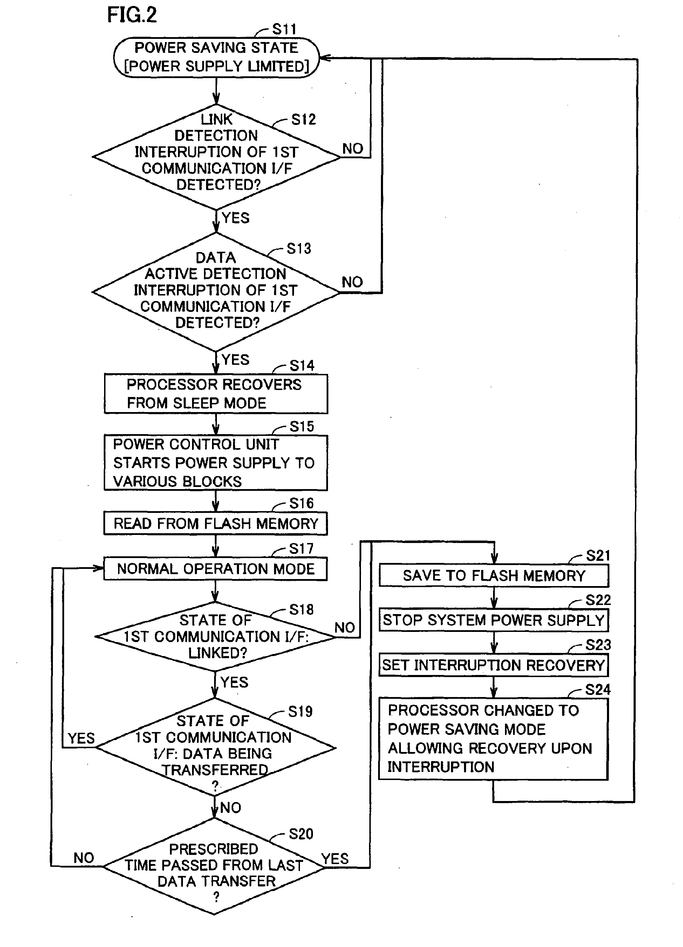

Fig.2 is a flowchart representing a process procedure of the communication terminal device in accordance with the first embodiment of the present invention. The process shown in Fig. 2 is realized mainly by processor 12 executing the program transferred from flash memory 14 to RAM 13.

First, processor 12 executes a prescribed instruction and thereby enters the power saving mode (S11). Before entering the power saving state, processor 12 outputs control signal 25 to power supply control unit 15, whereby power supply to RAM 13, flash memory 14 and second communication interface 16 is stopped. In the power saving state, power is supplied to the first communication interface 11, for detecting link establishment and data transfer in LAN 3.

Then, link detection interruption signal 21 and data detection interruption signal 22 from the first communication interface 11 are detected (S12, S 13).

Only when link detection interruption signal 21 is asserted (S12, Yes) and data detection interruption signal 22 is asserted (S 13, Yes), interruption signal 23 from interruption processing circuit 17 is asserted, and the process flow proceeds to step S 14 and the following steps. Otherwise, the flow returns to step S 11, and the power saving state of processor 12 continues.

When interruption signal 23 from interruption processing circuit 17 is asserted, processor 12 recovers from the power saving mode (S14), and outputs control signal 25 to power supply control unit 15, whereby power supply to RAM 13, flash memory 14 and second communication interface 16 is resumed (S 15).

Next, processor 12 reads information that was saved in flash memory 14 before entering the power saving state, to recover the state before entering the power saving state (S 16). Then, the normal operation mode starts (S 17). The normal operation mode means that power is supplied to various blocks, and communication terminal device 1 is capable of communication through LAN 3 and PLC 5 and, in this mode, data received from computer 2 is transmitted through PLC 5 and the data received from PLC 5 is transmitted to computer 2 through LAN 3.

Next, processor 12 reads a status from the first communication interface 11, to determine whether or not a link is established (S 18). If the link is not established, that is, if the link is cut off (S18, No), the process proceeds to step S21.

If the link is established (S 18, Yes), the status is read from the first communication interface 11 to determine whether data is being transferred (S 19). If any data is being transferred (S 19, Yes), the flow returns to step S 17 and the following steps are repeated.

At this time, it is possible to reduce power consumption of processor 12 in accordance with the frequency of data transfer by the first communication interface 11. By way of example, assume that pulses having the width of 100 ns are set to be output when data transfer by the first communication interface 11 is detected. Further, assume that processor 12 has a function of changing the clock frequency.

When processor 12 detects 1,000,000 or more pulses having the width of 100 ns within 1 second from the first communication interface 11 while streaming is being done with the packet size of 1024 Bytes (8192 bits), it is possible that packet transmission/reception is being done at a rate of 10 Mbps or higher. In that case, processor 12 operates with the clock of 200 MHz to process packets.

On the other hand, if packet transmission/reception is less frequent and the number of pulses detected within one second is 100,000 or smaller, high speed processing of processor 12 is unnecessary. Therefore, in that case, processor 12 is set to operate at a clock of 20 MHz, to reduce power consumption.

If data is not being transferred (S 19, No), whether or not a prescribed time has passed after the last data transfer is determined (S20). If a prescribed time has not yet passed from the last data transfer (S20, No), the flow returns to step S 17 and the following processes are repeated. If the prescribed time has passed from the last data transfer (S20, Yes), the process proceeds to step S21.

At step S21, processor 12 saves information necessary to recover the normal operation mode in flash memory 14. Then, it outputs control signal 25 to power supply control unit 15, thereby to stop power supply to RAM 13, flash memory 14 and the second communication interface 16 (S22).

Next, processor 12 performs an interruption recovery setting (S23). This is a process for setting with which of the plurality of interruption signals the operation is to be recovered from the power saving mode. In the present embodiment, only the interruption signal 23 from interruption processing circuit 17 is received and other interruption signals are masked.

Finally, processor 12 executes a prescribed instruction to enter the power saving mode (S24), and the processes after step S 11 are repeated.

In the present embodiment, the recovery from the power saving mode is done in response to interruption signal 23 from interruption processing circuit 17. It is also possible to recover from the power saving mode by a so-called polling, in which a prescribed time is set in an interval timer contained in processor 12 upon entering the power saving mode, and when the interruption signal from the interval timer is asserted, operation is recovered, the status is read from the first communication interface 11 and link detection and data detection are performed. In that case, the normal operation mode is entered only when both link and data are detected, and otherwise, processor 12 again enters the power saving mode.

Though processor 12 is set to recover from the power saving mode when link detection interruption signal 21 and data detection interruption signal 22 from the first communication interface 11 are asserted, it may recover from the power saving mode when link detection interruption signal 21 is asserted, without detecting the data detection interruption signal 22. This approach would be well suited to a communication terminal of which response to data is of high importance.

Alternatively, processor 12 may be recovered from the power saving mode when data detection interruption signal 22 is asserted, without detecting link detection interruption signal 21.

Further, though power supply to the second communication interface 16 is stopped in the power saving mode, power supply may not be stopped in the power saving mode as in the case of the first communication interface 11, and the processor 12 may also recover from the power saving mode when interruption signal 24 from the second communication interface 16 is asserted. This enables monitoring of states of the plurality of communication interfaces.

Further, in the power saving state, power supply control unit 15 stops power supply to RAM 13, flash memory 14 and the second communication interface 16. If these external devices have a power save mode, the devices may be set to the power save mode, without stopping power supply.

As described above, in communication terminal device 1 in accordance with the present embodiment, processor 12 stops power supply to RAM 13, flash memory 14 and the second communication interface 16 and enters the power saving mode, and when link detection interruption signal 21 and data detection interruption signal 22 are asserted, it recovers from the power saving mode. Therefore, power consumption of communication terminal device 1 as a whole can significantly be reduced.

Further, processor 12 is adapted to recover from the power saving mode when interruption signal 23 from interruption processing circuit 17 is asserted. Therefore, the state before entering the power saving mode can be resumed in a short period of time and the speed of processing can be improved.

Further, if the recovery from the power saving mode is adapted to be done when the interruption signal from the first communication interface 11 or the interruption signal from the second communication interface 16 is asserted, it becomes possible to monitor the states of a plurality of communication interfaces.

Further, if only the link detection interruption signal 21 is detected and the recovery from the power saving mode is adapted to be done when a link is established, even a communication device in which response to data is of high importance can work well.

### (Second Embodiment)

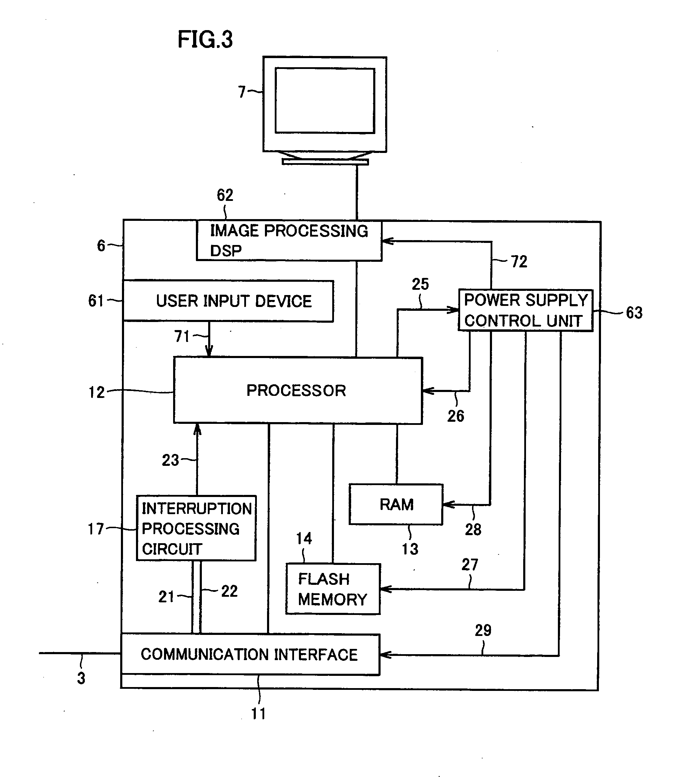

Fig. 3 is a block diagram showing a schematic configuration of the communication system including a communication terminal device in accordance with a second embodiment of the present invention. The communication system includes a communication terminal device 6 and a display device 7. Communication terminal device 6 in accordance with the present embodiment is intended for an STB such as a VOD (Video On Demand) device.

Communication terminal device 6 is connected to LAN 3. Communication terminal device 6 may be connected to an external communication network such as the Internet, through a communication line. Further, communication terminal device 6 reproduces video images and sounds by outputting video signals and audio signals to display device 7.

Communication terminal device 6 includes: a communication interface 11 connected to an external communication network such as the Internet through LAN 3 or a communication line; a processor 12 for overall control of communication terminal device 6; a RAM 13; a flash memory 14; a power supply control unit 63 controlling power supply to various portions in communication terminal device 6; an interruption processing circuit 17; a user input device 61; and an image processing DSP (Digital Signal Processor) 62. Portions having the same structures and functions as those of the first embodiment are denoted by the same reference characters.

Power supply control unit 63 controls power supply lines 26 to 29 and 72 supplying power to processor 12, flash memory 14, RAM 13, communication interface 11 and image processing DSP 62, in accordance with control signal 25 from processor 12. In the present embodiment, power is always supplied to processor 12 and communication interface 11.

Processor 12 applies image data and audio data received through communication interface 11 to image processing DSP 62. Image processing DSP 62 reproduces and outputs to display device 7 the image data and the audio data received from processor 12.

User input device 61 is implemented by a switch, a remote controller or the like, and used when the user wishes to display video images on display device 7. When there is an input to user input device 61, an interruption signal 71 is input to processor 12.

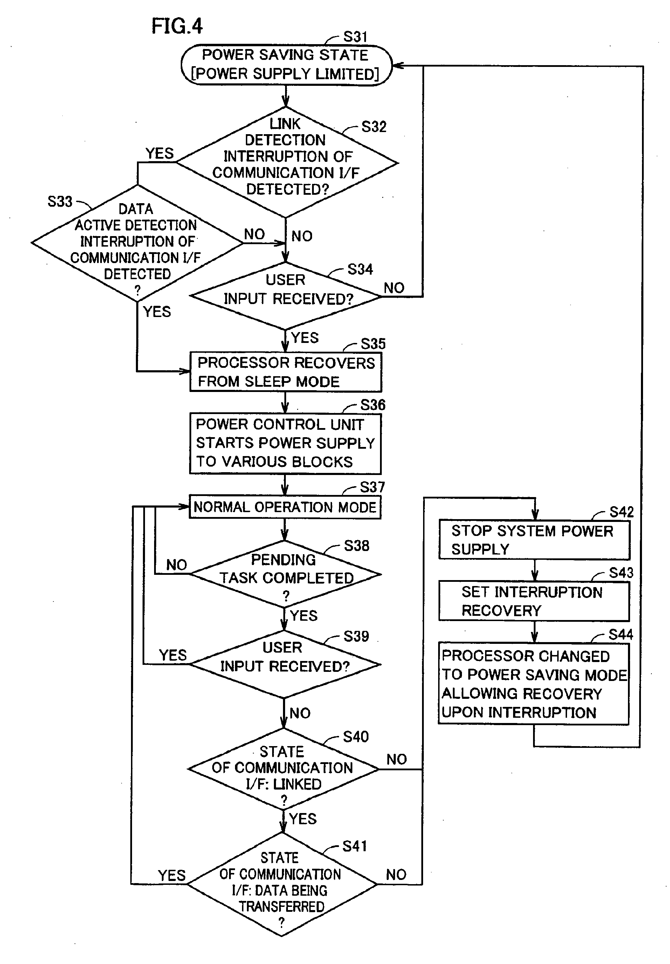

Fig. 4 is a flowchart representing a process procedure of the communication terminal device in accordance with the second embodiment of the present invention. First, processor 12 executes a prescribed instruction and thereby enters the power saving mode (S31). Before entering the power saving state, processor 12 outputs control signal 25 to power supply control unit 63, whereby power supply to RAM 13, flash memory 14 and image processing DSP 62 is stopped. In the power saving state, power is supplied to communication interface 11, for detecting link establishment and data transfer in LAN 3.

Then, link detection interruption signal 21 and data detection interruption signal 22 from communication interface 11 are detected (S32, S33).

When link detection interruption signal 21 is asserted (S32, Yes) and data detection interruption signal 22 is asserted (S33, Yes), an interruption signal 23 from interruption processing circuit 17 is asserted, and the flow proceeds to step S35 and the following steps.

When link detection interruption signal 21 is not asserted (S32, No) or if data detection interruption signal 22 is not asserted (S33, No), whether there is an input from the user through user input device 61 or not is determined (S34).

If there is no user input (S34, No), the flow returns to step S31, and the power saving state of processor 12 continues. If there is any input from the user (S34, Yes), the process proceeds to step S35.

At step S35, processor 12 recovers from the power saving mode, and outputs control signal 25 to power supply control unit 63, whereby power supply to RAM 13, flash memory 14 and image processing DSP 62 is resumed (S36).

Next, processor 12 reads information that was saved in flash memory 14 before entering the power saving state, to recover the state before entering the power saving state. Then, the normal operation mode starts (S37). The normal operation mode means that power is supplied to various blocks, and communication terminal device 6 is capable of reproducing and outputting to display device 7 the image data and audio data received through LAN 3.

Next, whether or not a pending task has been complete is determined (S38). If there is any pending task that is not yet complete (S38, No), the flow returns to step S37 and the task processing continues. If the task is complete (S38, Yes), whether or not there is any user input through user input device 61 is determined (S39).

If there is any user input (S39, Yes), the flow returns to step S37 and the processes from this step are repeated. If there is no user input (S39, No), processor 12 reads the status from communication interface 11, to determine whether a link is established (S40). If the link is not established (S40, No), the process proceeds to step S42.

If the link is established (S40, Yes), the status is read from communication interface 11, thereby to determine whether data is being transferred (S41). If any data is being transferred (S41, Yes), the flow returns to step S37 and the following steps are repeated. If data is not being transferred (S41, No), the process proceeds to step S42.

At step S42, processor 12 saves information necessary to recover the normal operation mode in flash memory 14. Then, it outputs control signal 25 to power supply control unit 63, thereby to stop power supply to RAM 13, flash memory 14 and image processing DSP 62.

Next, processor 12 performs an interruption recovery setting (S43). This is a process for setting with which of the plurality of interruption signals the operation is to be recovered from the power saving mode. In the present embodiment, only the interruption signal 23 from interruption processing circuit 17 and interruption signal 71 from user input device 61 are received and other interruption signals are masked.

Finally, processor 12 executes a prescribed instruction to enter the power saving mode (S44), and the processes after step S31 are repeated.

As described above, in communication terminal device 6 in accordance with the present embodiment, in addition to the effects described in connection with the first embodiment, recovery from the power saving mode is also attained when there is a user input through user input device 61. Therefore, it is possible to set the communication terminal device to the operating state in response to a user instruction and, as a result, a communication terminal device of good operability can be realized.

The embodiments as have been described here are mere examples and should not be interpreted as restrictive. The scope of the present invention is determined by each of the claims with appropriate consideration of the written description of the embodiments and embraces modifications within the meaning of, and equivalent to, the languages in the claims.

## Claims

1. A communication terminal device, comprising:
a first communication interface (11) connected to a local area network;
a processor (12) for detecting an interruption from said first communication interface (11) or detecting a state of said first communication interface (11) in a prescribed period; and
a power supply control unit (15, 63) for controlling power supply to various portions in accordance with a link state detected by said processor (12).

2. The communication terminal device according to claim 1, wherein
when a link of said first communication interface (11) is cut off, said processor (12) controls said power supply control unit (15, 63) and stops power supply to the various portions.

3. The communication terminal device according to claim 2, wherein
when a link of said first communication interface (11) is cut off, said processor (12) makes a transition to a power saving mode.

4. The communication terminal device according to claim 2 or 3, wherein
when a link of said first communication interface (11) is cut off, said processor (12) sets an external device to a power save mode.

5. The communication terminal device according to claim 1, wherein
when a link of said first communication interface (11) is established, said processor (12) controls said power supply control unit (15, 63) and resumes power supply to the various portions.

6. The communication terminal device according to claim 5, wherein
when a link of said first communication interface (11) is established, said processor (12) recovers from power saving mode.

7. The communication terminal device according to claim 1, further comprising
an input unit (61) for receiving a user input; wherein
when there is an input through said input unit (61), said processor (12) controls said power supply control unit (63) and resumes power supply to the various portions.

8. The communication terminal device according to claim 7, wherein
when there is an input through said input unit (61), said processor (12) recovers from power saving mode.

9. The communication terminal device according to any of claims 1 to 8, further comprising
a second communication interface (16) connected to a wide area network; wherein
said processor (12) detects interruptions from said first communication interface (11) and said second communication interface (16), or detects a link state of said first communication interface (11) and said second communication interface (16) in a prescribed period.

10. A communication terminal device, comprising:
a first communication interface (11) connected to a local area network;
a processor (12) for detecting a state of said first communication interface (11); and
a power supply control unit (15, 63) for controlling power supply to various portions in accordance with a data transfer state detected by said processor (12).

11. The communication terminal device according to claim 10 wherein
said processor (12) detects an interruption from said first communication interface (11) or detects a state of said first communication interface (11) prescribed period.

12. The communication terminal device according to claim 10 or 11, wherein
when absence of data transfer by said first communication interface (11) is detected, said processor (12) controls said power supply control unit (15) and stops power supply to the various portions.

13. The communication terminal device according to claim 12, wherein
when absence of data transfer by said first communication interface (11) is detected, said processor (12) makes a transition to a power saving mode.

14. The communication terminal device according to claim 12 or 13, wherein
when absence of data transfer by said first communication interface (11) is detected, said processor (12) sets an external device to a power save mode.

15. The communication terminal device according to claim 10 or 11, wherein
when presence of data transfer by said first communication interface (11) is detected, said processor (12) controls said power supply control unit (15, 63) and resumes power supply to the various portions.

16. The communication terminal device according to claim 15, wherein
when presence of data transfer by said first communication interface (11) is detected, said processor (12) recovers from the power saving mode.

17. The communication terminal device according to claim 10 or 11, further comprising
an input unit (61) for receiving a user input; wherein
when there is an input through said input unit (61), said processor (12) controls said power supply control unit (63) and resumes power supply to the various portions.

18. The communication terminal device according to claim 17, wherein
when there is an input through said input unit (61), said processor (12) recovers from a power saving mode.

19. The communication terminal device according to any of claims 10 to 18, further comprising
a second communication interface (16) connected to a wide area network; wherein
said processor (12) detects data transfer state of said first communication interface (11) and said second communication interface (16).

20. The communication terminal device according to any of claims 1 to 19, wherein
said processor (12) detects frequency of data transfer by said first communication interface (11), and controls frequency of clock supplied to the processor in accordance with the frequency information.

21. A communication terminal device, comprising:
a communication interface (11) connected to a local area network;
a processor (12) for detecting a state of said communication interface (11); and
a power supply control unit (15, 63) for controlling power supply to various portions in accordance with link state and data transfer state detected by said processor (12).
